# FASCICULE DE BREVET EUROPEEN

(11) **EP 1 032 510 B1**
(45) Date de publication et mention de la délivrance du brevet: **02.11.2006**
(21) Numéro de dépôt: 99969383.1
(22) Date de dépôt: 24.09.1999
(51) Int. Cl.: B60Q 1/04, F16B 5/02

(54) **APPAREIL D'ECLAIRAGE OU DE SIGNALISATION EQUIPE DE MOYENS DE MONTAGE REGLABLE PERFECTIONNES, ET ELEMENT DE STRUCTURE ASSOCIE POUR VEHICULE AUTOMOBILE**
EINSTELLBARE MONTAGEVORRICHTUNG FÜR SIGNAL-ODER BELEUCHTUNGSEINRICHTUNG UND DAZUGEHÖRIGES STRUKTURELEMENT FÜR KRAFTFAHRZEUGE
LIGHTING OR SIGNALLING EQUIPMENT PROVIDED WITH IMPROVED ADJUSTABLE FIXING MEANS AND ASSOCIATED STRUCTURAL ELEMENT FOR MOTOR VEHICLE

(30) Priorité: 24.09.1998 FR 9811930
(43) Date de publication de la demande: 06.09.2000
(73) Titulaire: VALEO VISION, 93000 Bobigny (FR); VALEO THERMIQUE MOTEUR, 78321 La Verrière (FR)
(72) Inventeur: GUYOMARD, Jean-Nicolas, F-27930 Le Mesnil Fuguet (FR)
(74) Mandataire: Rolland, Jean-Christophe
(86) Numéro de dépôt international: PCT/FR1999/002282
(87) Numéro de publication internationale: WO 2000/017008

(56) Documents cités:
- EP-A- 0 562 581
- EP-A- 0 679 553
- DE-B- 1 680 713
- FR-A- 2 256 340
- GB-A- 2 252 805

## Description

La présente invention concerne d'une façon générale la fixation des appareils d'éclairage et/ou de signalisation dans les véhicules automobiles.

De façon classique (selon la préambule de la revendication 1), un dispositif de fixation par exemple d'un boîtier de projecteur à l'avant d'un véhicule comprend des moyens de montage qui, dans un premier état dit de pré-montage, autorisent de légers déplacements du boîtier par rapport à la partie fixe sur laquelle il est monté, ceci en particulier pour permettre d'ajuster la position de la glace du projecteur par rapport à la carrosserie avoisinante. Dans un second état, le verrouillage est effectif, si bien que le projecteur est fixé dans la position préalablement ajustée.

Ces dispositifs sont plus ou moins complexes, et font appel en particulier à des pièces additionnelles relativement encombrantes montées sur le boîtier du projecteur, ce qui présente le double inconvénient d'accroître le prix de revient du projecteur et l'espace nécessaire pour le loger sous le capot moteur.

En outre, ces dispositifs connus font en général appel à un premier verrouillage du projecteur (pré-montage) à l'aide de premiers moyens, puis à une fixation définitive à l'aide de seconds moyens, distincts des premiers. Ceci accroît encore le coût de revient et complique les opérations de montage.

La présente invention vise à pallier ces inconvénients de l'état de la technique et à proposer un appareil d'éclairage ou de signalisation équipé de moyens de fixation réglable qui soient très simples et fiables à mettre en oeuvre, qui soient économiques à réaliser, et qui en outre offrent une bonne inviolabilité de l'appareil une fois monté dans le véhicule. Un autre objet de l'invention est de proposer des aménagements de pré-montage conçus en adaptation avec de tels moyens de fixation réglable pour renforcer encore l'inviolabilité et éviter les jeux, sources notamment de vibrations, dus aux tolérances de fabrication.

Ainsi l'invention propose selon un premier aspect un appareil d'éclairage ou de signalisation pour véhicule automobile, comportant un boîtier et des moyens de fixation réglable dudit boîtier sur une partie de structure du véhicule, ainsi que des moyens de butée s'opposant à un déplacement du projecteur dans une direction donnée pour définir une position de référence dudit projecteur par rapport à la carrosserie du véhicule, caractérisé en ce que lesdits moyens de fixation réglable comprennent un organe de fixation par rotation apte à coopérer avec ladite partie de structure et entraînant pendant une phase initiale de sa rotation un moyen formant came apte à solliciter l'appareil dans ladite direction donnée.

Des aspects préférés, mais non limitatifs, de l'appareil selon l'invention sont les suivants :
- ledit organe de fixation est constitué par une vis.
- ledit moyen formant came comprend une douille présentant une partie essentiellement circulaire formant une came et traversée par ladite vis de façon excentrée.
- ladite vis entraîne ladite douille en rotation par le jeu d'une friction limitée entre le filetage de la vis et un passage formé dans la douille pour la traversée de la vis.
- la douille possède un canon recevant ladite vis et apte à être engagé étroitement dans une ouverture formée dans ladite partie de structure du véhicule.
- ledit canon comprend une pluralité de branches aptes à être sollicitées par ladite vis, lors de son vissage, en direction d'une paroi de ladite partie de structure délimitant ladite ouverture.
- ladite douille est constituée de deux parties reliées par au moins une zone frangible, une partie intérieure étant solidaire en rotation de la vis tandis qu'une partie extérieure formant une came.
- ladite vis est vissée directement dans une ouverture formée dans la partie de structure du véhicule.
- ladite partie formant came agit sur un muret entourant un logement dans lequel elle est reçue.
- le boîtier de l'appareil possède au moins une patte de pré-montage possédant une partie terminale d'accrochage et apte à coopérer avec une ouverture formée dans ladite partie de structure.

Selon un deuxième aspect, l'invention propose un élément de structure pour véhicule automobile, caractérisé en ce qu'il est constitué par une pièce d'un seul tenant destinée à s'étendre à l'avant du véhicule sur une partie substantielle de sa largeur et possédant dans la région de ses deux extrémités latérales des aménagements pour le montage et la fixation de deux appareils tels que définis ci-dessus, constituant des projecteurs gauche et droit.

L'invention propose également un ensemble d'un élément de structure tel que défini ci-dessus et de deux appareils d'éclairage tels que définis plus haut, constituant des projecteurs gauche et droit.

Selon un troisième aspect, l'invention propose un élément de structure pour véhicule automobile, destiné à recevoir au moins un appareil dont le boîtier ossède au moins une patte de pré-montage possédant une partie terminale d'accrochage et apte à coopérer avec une ouverture formée dans ledit élément de structure, caractérisé en ce qu'il possède au moins une première ouverture pour recevoir l'organe de fixation par rotation appartenant aux moyens de fixation réglable de l'appareil, et au moins une seconde ouverture destinée à recevoir une patte de pré-montage de l'appareil de l'appareil en autorisant son déplacement selon ladite direction donnée, ladite seconde ouverture présentant une largeur, mesurée transversalement à ladite direction donnée, qui diminue lorsque ladite fente est parcourue selon ladite direction donnée.

Avantageusement, la ou chaque seconde ouverture comprend, selon ladite direction donnée, une première partie d'une première largeur constante suivie d'une seconde partie d'une seconde largeur constante inférieure à la première ; par exemple, ladite première largeur constante est supérieure à l'épaisseur hors-tout d'une patte de pré-montage associée, tandis que ladite seconde largeur constante est légèrement supérieure l'épaisseur d'une partie de liaison de ladite patte.

Pour compenser les jeux et éviter les vibrations, l'élément peut aussi comprendre au voisinage de la ou chaque seconde ouverture une rampe apte à solliciter la patte de pré-montage associée dans une direction tendant à l'extraire de ladite seconde ouverture.

Enfin l'invention propose un ensemble d'un élément de structure selon le troisième aspect ci-dessus et d'au moins un appareil d'éclairage ou de signalisation tel qu'il y est défini.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue schématique de face d'un dispositif de montage réglable selon l'invention,
les figures 2 à 4 sont des vues en coupe verticale axiale du dispositif de la figure 1, dans trois positions différentes,
la figure 5 est une vue en coupe horizontale axiale du dispositif des figures 1 à 4,
la figure 6 est une demi-vue schématique en perspective d'un élément de structure d'un véhicule, sur lequel un projecteur équipé de moyens selon l'invention peut être monté,
la figure 7 est une section verticale schématique du projecteur monté sur l'élément de structure de la figure 6 à l'aide de moyens de pré-montage,
la figure 8 est une section horizontale schématique montrant un aménagement de calage du projecteur ainsi qu'un dispositif de montage tel qu'illustré sur les figures 1 à 5,
les figures 9a et 9b illustrent la relation géométrique entre les moyens de pré-montage et un dispositif de montage selon l'invention, dans deux positions différentes,
les figures 10a et 10b illustrent schématiquement en vue de dessus et en coupe les moyens de pré-montage pourvus d'aménagements de compensation de jeux, et
la figure 11 est une vue en coupe axiale d'un dispositif de montage réglable selon une variante de réalisation de l'invention.

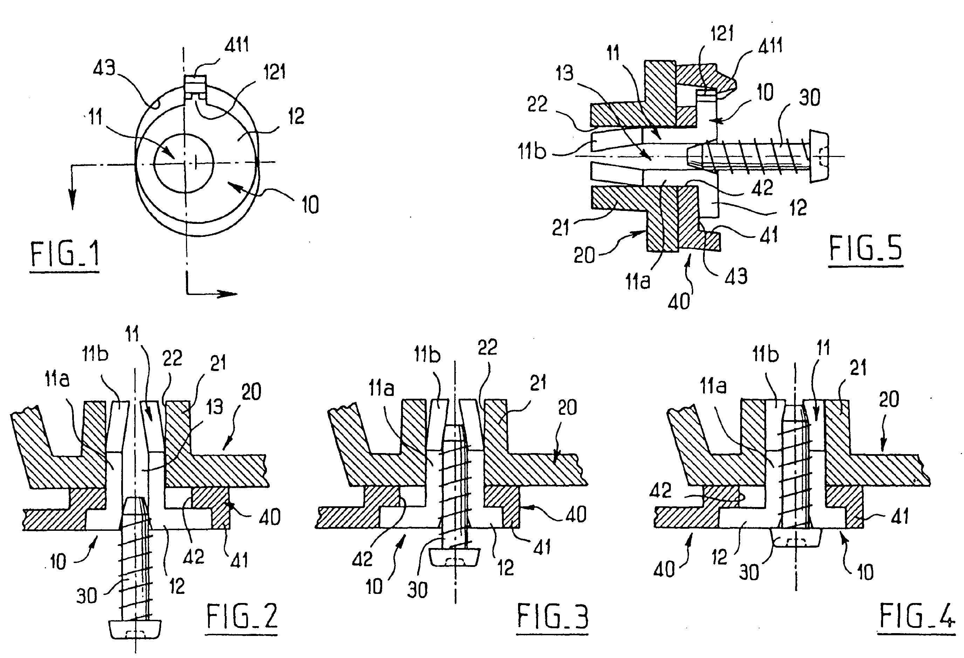

En référence tout d'abord aux figures 1 à 5, on a représenté schématiquement un dispositif de fixation réglable d'un appareil d'éclairage ou de signalisation, tel qu'un projecteur, sur une partie de structure d'un véhicule automobile.

La référence 40 désigne un appendice généralement plat d'un boîtier du projecteur, formé de préférence d'un seul tenant avec lui, dans lequel est formée une ouverture traversante oblongue 42, cette ouverture étant circonscrite, à distance déterminée de cette dernière, par un muret 41 définissant un logement intérieur 43 également oblong, l'ouverture 42 et le logement 43 étant tous deux légèrement allongés en direction verticale. Ce muret comporte un ou plusieurs pions 411 axialement saillants vers l'extérieur et définissant par un décrochement vers l'intérieur autant de dents de retenue pour une douille de réglage et de verrouillage globalement désignée par la référence 10.

Cette douille 10 possède une partie en forme générale de disque plan 12 dont le diamètre est très légèrement inférieur à la largeur de l'espace oblong 43 délimité par le muret 41. De façon excentrée par rapport à la partie 12 est formé un canon 11 constitué de préférence par une série de pattes séparées par des fentes s'étendant dans des plans axialo-radiaux, de manière à assurer leur déformabilité. Ce canon comporte une partie de racine 11a généralement cylindrique de révolution, dont l'axe est décalé par rapport à celui du disque 12 pour réaliser l'excentricité précitée, et une partie terminale 11b en forme générale de cône rentrant.

Ce canon 11 est traversé de part en part par un passage généralement cylindrique 13, qui se rétrécit avec une conicité correspondante au niveau de la partie terminale 11b du canon.

En outre, la partie en forme de disque 12 possède au moins une patte 121 en saillie radialement et apte à coopérer avec la dent de retenue 411 au moins prévue, de manière à ce que la douille 10 puisse être montée sur l'appendice 40 du boîtier de projecteur en engageant élastiquement sa partie en forme de disque 12 dans l'espace défini par le muret périphérique 41 de l'appendice 40 après avoir engagé le canon 11 dans l'ouverture 42 de ce même appendice, jusqu'à ce que la ou chaque patte 121 s'engage au-dessous de la dent 411. On notera ici que la ou les pattes 121 et la ou les dents de retenue 411 ont ici pour seule objet d'assurer la retenue de la douille 10 sur l'appendice 40 avant l'opération de montage. En effet dès le début de la rotation de la douille, la coopération entre ces pattes et ces dents disparaît, la fonction de retenue précitée devenant superflue.

La douille 10 est apte à recevoir dans son passage traversant une vis 30 présentant un filetage de diamètre approprié et une tête.

On observe d'ores et déjà que lorsque la douille 10 est tournée par rapport à l'appendice 40, en étant guidée par la coopération entre la partie en forme de disque 12 et le muret 41, le canon 11, de par son excentricité, décrit un cercle.

L'appendice 40 équipé de la douille 10 et de la vis 30 est apte à coopérer avec un aménagement formé sur une partie de structure 20 du véhicule.

Cet aménagement est constitué par une collerette 21 qui s'étend à l'opposé de l'appendice 40 et qui circonscrit une ouverture traversante 22 généralement cylindrique de révolution, dont le diamètre est très légèrement supérieur au diamètre extérieur du canon 11 de la douille 10.

Le positionnement du boîtier de projecteur au niveau de son appendice 40, par rapport à la partie de structure 20, est effectué de la façon suivante : tout d'abord, comme décrit plus haut, on monte la douille 10 dans l'appendice 40, puis ce dernier est positionné au voisinage de la face externe de la partie de structure, opposée à la collerette 21, de telle sorte que le canon 11 soit sensiblement aligné avec l'ouverture 22 de la partie de structure 20, et un mouvement axial engage ensuite le canon 11 dans cette ouverture 22.

On commence alors à visser la vis 30 dans le passage 13 de la douille (figure 2). Durant cette phase, la vis 30 entraîne, par le jeu des frottements entre le filetage de la vis et la paroi interne du canon 11, la douille 10. L'excentricité du canon amène au cours de cette rotation la partie en forme de disque 12, formant came, à solliciter l'appendice 40 au niveau de son muret 41. Ceci provoque un déplacement latéral de l'appendice 40 (de la droite vers la gauche en passant de la figure 2 à la figure 3), et donc de l'ensemble du boîtier du projecteur dans cette direction, par rapport à la partie de structure 20. Comme on verra en détail plus loin, ce déplacement est tel qu'il provoque, en une région du boîtier du projecteur située à distance du dispositif de fixation réglable, la venue en butée de ce dernier contre un élément de carrosserie. La translation du boîtier est alors de fait interrompue, si bien que la douille 10 ne peut plus tourner, et la vis 30 continuant à être tournée est cette fois-ci vissée plus complètement dans la douille 10 (voir figure 3), jusqu'à ce que son extrémité libre atteigne la partie conique 11b du canon 11, pour solliciter fortement cette partie vers l'extérieur, contre la paroi de l'ouverture 22 de l'élément de structure (voir figure 4). A ce stade, le frottement entre la partie 11b ainsi expansée et ladite paroi est telle que boîtier du projecteur est à cet endroit fermement et rigidement relié à la partie de structure, dans la position de référence imposée par la venue en butée évoquée ci-dessus.

On observera ici que la forme oblongue de l'espace 43 en direction verticale est choisie suffisante pour absorber l'ensemble de la composante verticale du déplacement relatif entre l'axe de la partie 12 de la douille 10 et la partie de structure 20 au cours de la rotation ; le boîtier du projecteur est en effet immobilisé en direction verticale par d'autres moyens, tels qu'on les décrira plus loin. On observera également que l'ouverture 42 formée dans l'appendice 40 est suffisamment grande pour autoriser les déplacements du canon 11 dans celle-ci lors de la rotation de la douille 10.

On réalise ainsi un dispositif de fixation réglable simple et économique, qui permet dans une phase initiale de solliciter le projecteur vers une position de référence en direction latérale, et dans une phase finale, par une même opération d'entraînement en rotation d'une vis, de réaliser le blocage dans cette position.

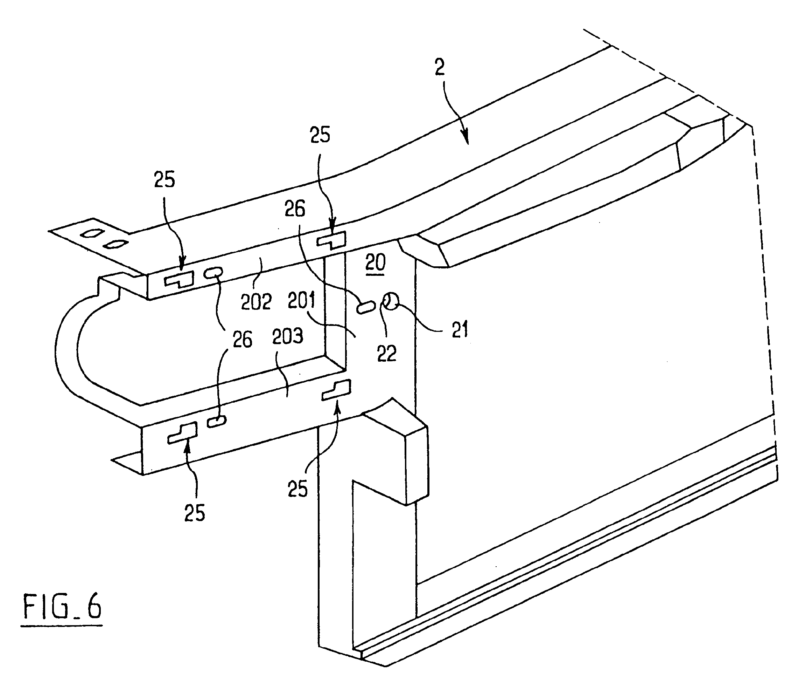

Maintenant en référence à la figure 6, on a représenté schématiquement un élément dit de « face avant » du véhicule, globalement désigné par la référence 2, dont un prolongement latéral 20, destiné spécifiquement à recevoir le projecteur, constitue la partie de structure précitée.

Cette partie de structure 20 possède un montant 201 dans lequel sont formées l'ouverture 22 et sa collerette 21, à partir duquel s'étendent vers l'extérieur deux membrures 202 et 203 essentiellement horizontales et parallèles entre elles.

Dans ces membrures 202, 203 sont formées, sensiblement aux quatre coins d'un rectangle, quatre ouvertures traversantes 25 en forme générale de « L », telles qu'on les décrira en détail plus loin.

Sont également formées dans ces membrures trois ouvertures 26 oblongues en direction horizontale, destinées à coopérer avec des pions de centrage formés à l'arrière du boîtier du projecteur pour assurer le positionnement correct de celui -ci lors de la mise en oeuvre des moyens d'accrochage, tels qu'on va les décrire plus loin, qui coopèrent avec les ouvertures 25, et du dispositif de fixation décrit ci-dessus en référence aux figures 1 à 5.

Comme on le voit par ailleurs sur la figure 6, la face avant 2 est destinée à occuper sensiblement toute la largeur du véhicule dans la région de l'avant de celui-ci, pour recevoir d'une part les projecteurs gauche et droit, et d'autre part d'autres organes du véhicule tels que le ou les radiateurs, le ou les groupes motoventilateurs associés, etc.

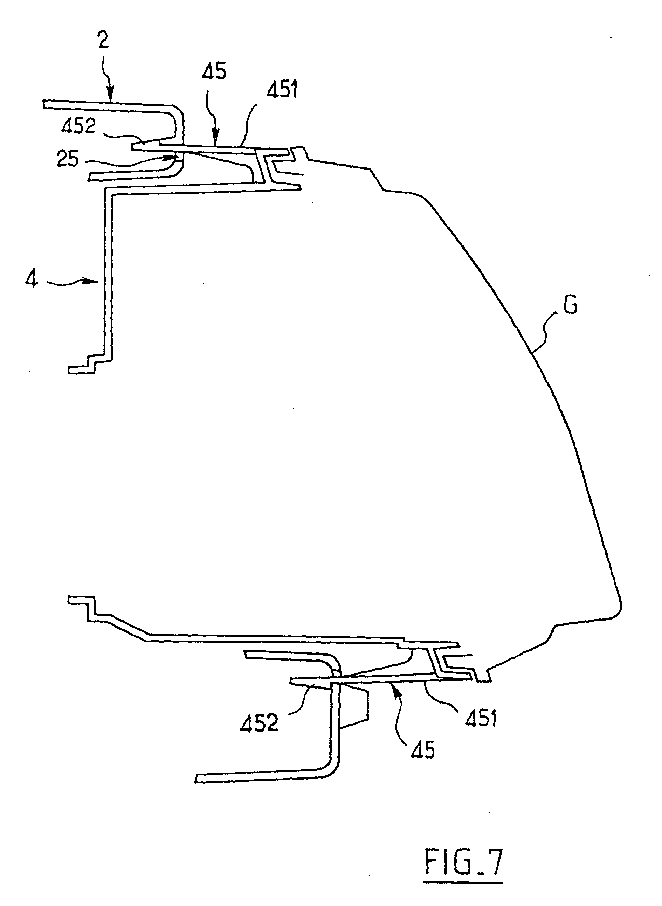

Maintenant en référence à la figure 7, on a représenté schématiquement l'ensemble du projecteur, avec notamment un boîtier 4 et une glace G.

Aux emplacements correspondant aux quatre ouvertures traversantes 25 de la partie de structure 20, le boîtier possède quatre pattes, désignées globalement en 45, qui s'étendent vers l'arrière et qui comportent chacune une partie de liaison 451 généralement plane et de section rectangulaire aplatie, et une partie terminale 452 possédant une protubérance de profil généralement triangulaire dirigée vers le haut ou vers le bas, selon que la patte est située en haut ou en bas, de manière à former une dent d'accrochage. On expliquera plus loin la façon dont coopèrent ces pattes d'accrochage 45 avec les ouvertures 25 décrites plus haut.

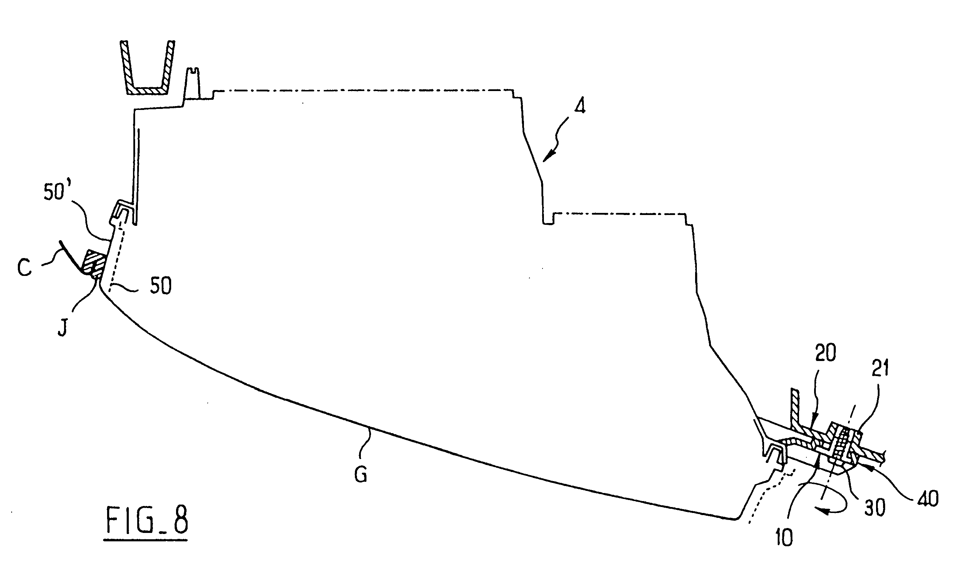

La figure 8 illustre schématiquement les moyens de butée permettant d'amener, lors de la manoeuvre du dispositif de fixation réglable, le projecteur dans sa position de référence. Le dispositif de fixation réglable tel que décrit plus haut est illustré dans la partie droite de la figure, tandis qu'à l'extrémité opposé un bord 50 de la glace G du projecteur est destiné à venir s'appuyer contre un joint d'étanchéité et de style J monté sur la carrosserie C au niveau de l'ouverture formée dans celle-ci pour accueillir la glace du projecteur.

Avant la manoeuvre du dispositif de fixation réglable, le bord précité occupe la position indiquée en 50 et illustrée en traits tiretés.

Pendant la phase intermédiaire de la manoeuvre du dispositif de fixation réglable, ledit bord se déplace jusqu'à la position indiquée en 50' et illustrée en traits pleins, c'est-à-dire en appui contre le joint J.

Selon une variante non illustrée, on peut prévoir que la position de référence du projecteur en direction latérale soit donnée par un aménagement particulier du boîtier 4 du projecteur en coopération avec d'autres aménagements de la carrosserie, en faisant intervenir ou non le joint de style entourant le projecteur.

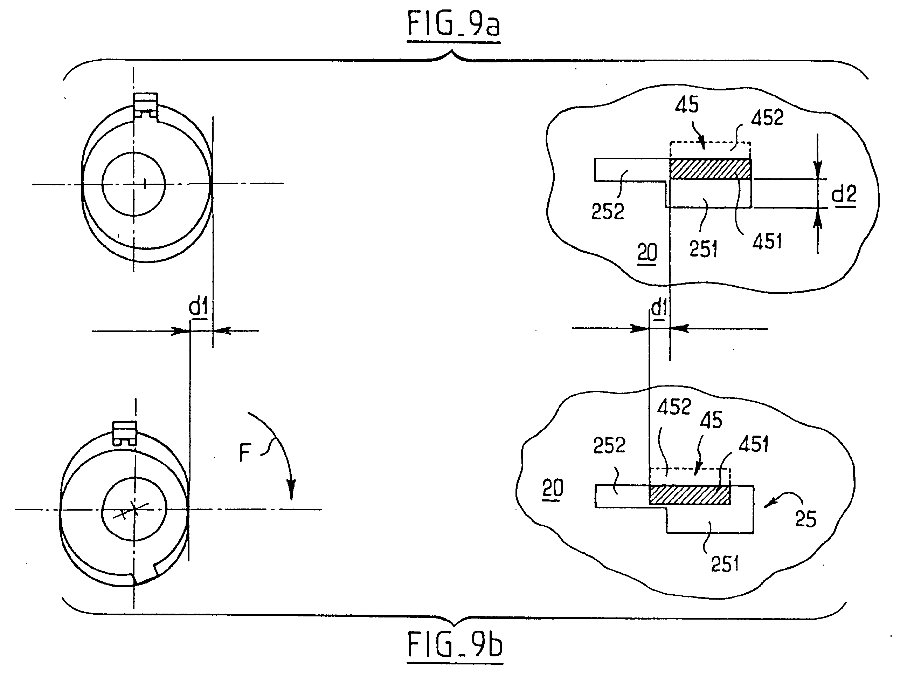

Maintenant en référence aux figures 9a et 9b, on va décrire le comportement combiné du dispositif de fixation réglable décrit en référence aux figures 1 à 5 et des moyens d'accrochage 25, 45 lors de la translation latérale du projecteur causée par ledit dispositif de fixation réglable.

La figure 9a illustre la position de l'ensemble juste après la mise en place du canon 11 du dispositif de fixation réglable dans l'ouverture 22 de la partie de structure 20 du véhicule. C'est au cours de cette même étape, comme l'illustre la partie droite de la figure 9, que chaque patte d'accrochage 45 va pouvoir être engagée dans l'ouverture traversante 25 de cette même partie de structure 20. On observe ici que chacune de ces ouvertures 25 possède une partie droite 251 et une partie gauche 252 présentant toutes deux sensiblement la même largeur, et que la partie droite possède une hauteur sensiblement égale au double de celle de la partie gauche 252, les bords supérieurs desdites parties gauche et droite étant alignés. La différence de hauteur entre ces parties gauche et droite est indiquée en d2. On observe en outre que la hauteur ou épaisseur de la partie de liaison 451 de chaque patte 45 est très légèrement inférieure à la hauteur de la partie gauche 252 de l'ouverture 25, et que la hauteur hors tout de la partie terminale 452 de la patte 45 est légèrement inférieure à la hauteur de la partie droite 251 de l'ouverture 25.

La position des ouvertures 25 par rapport à celle de l'ouverture 22 sur la partie 20 de la face avant 2 est telle que, dans la position précédant immédiatement le montage du canon 11 dans l'ouverture 22, chaque patte 45 fait en même temps face à la partie plus haute 251 de l'ouverture 25 associée, si bien qu'elle peut être engagée dans cette dernière. En poussant le projecteur vers l'arrière du véhicule, on réalise d'une part l'engagement du canon 11 dans l'ouverture 22, et d'autre part l'engagement de chaque patte d'accrochage 45 dans son ouverture 25, ce mouvement s'accompagnant d'une légère flexion de la patte 45 vers le bas, jusqu'à ce que la dent formée par sa partie terminale 452 vienne s'accrocher en arrière du bord supérieur de ladite ouverture 25 au niveau de sa partie droite 251.

Lorsqu'ensuite le dispositif de fixation réglable est mis en oeuvre comme décrit précédemment, par rotation selon la flèche F (figure 9b), il s'en suit une translation du projecteur vers la gauche sur une distance d1, jusqu'à l'arrivée dans la position de référence définie par les moyens de butée décrits plus haut. Cette position illustrée sur la figure 9b, et l'on observe que les parties de liaison 451 des pattes d'accrochage 45 sont alors venues s'engager dans les régions de moindre hauteur 252 des ouvertures 25, pour ainsi obtenir un accrochage sécurisé, dans lequel le projecteur ne peut être retiré - sauf à desserrer le dispositif de fixation réglable - qu'en cassant les pattes d'accrochage.

Ainsi le dispositif de fixation réglable et les moyens d'accrochage coopèrent pour réaliser non seulement un blocage du projecteur dans la position de référence souhaitée, mais également pour rendre la fixation du projecteur essentiellement inviolable.

On comprend que l'importance de l'excentricité au niveau de la douille 10, de même que la dimension des ouvertures 25 en direction horizontale, sont déterminées de façon à pouvoir faire face à toutes les tolérances de fabrication susceptibles d'être rencontrées qui déterminent elles-mêmes autant de positions de référence différentes du projecteur.

On observera ici que le calage du boîtier de projecteur 4 en direction verticale s'effectue avantageusement grâce aux pions de centrage prévus sur le boîtier du projecteur et engagés dans les ouvertures oblongues 26 de la partie de structure 20, comme évoqué plus haut. Les pattes 45 coopérant avec les ouvertures 25 peuvent également, en variante, assurer tout ou partie de ce calage vertical.

On notera ici que les figures 9a et 9b sont censées illustrées seulement les états correspondants des moyens d'accrochage et du dispositif de fixation réglable avant et après verrouillage, mais ne sont nullement censées illustrer la position réelle de ces moyens sur le boîtier 4 du projecteur et sur la partie de structure 20.

Il peut être par ailleurs utile de faire en sorte de supprimer les éventuels jeux existant en direction d'avant en arrière (à savoir selon l'axe du véhicule) entre les pattes d'accrochage 45 et la partie de structure 20 après la fixation définitive.

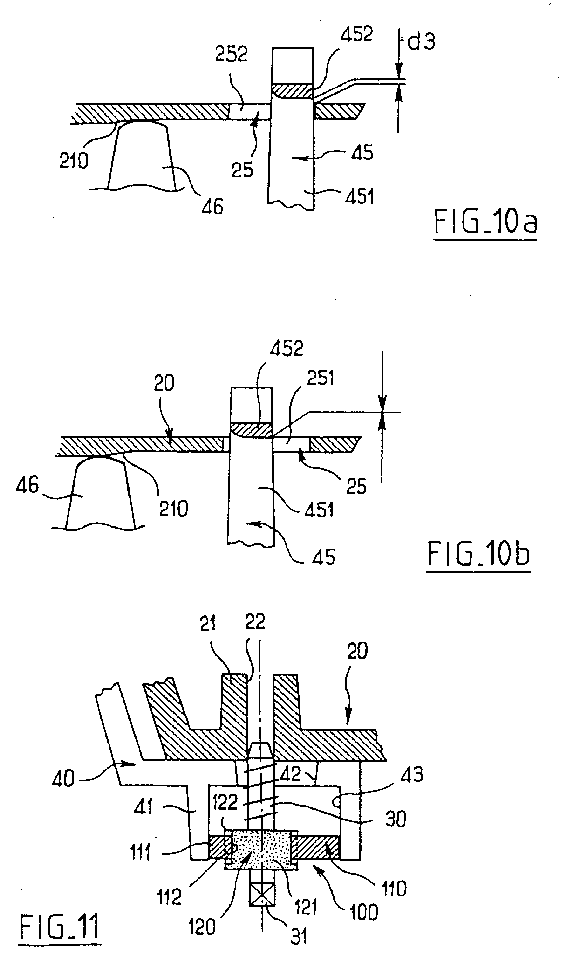

Ainsi l'on a représenté sur les figures 10a et 10b des moyens de compensation de jeux qui comprennent ici une rampe 210 formée sur une face antérieure de la partie de structure 20 au voisinage de l'ouverture 25, cette rampe étant apte à coopérer avec un bossage 46 par exemple venu de matière à l'arrière du projecteur au voisinage de chaque patte associée 45.

Les positions des figures 10a et 10b correspondent respectivement à celles des figures 9a et 9b. On observe que, lors du passage de la position de la figure 10a à celle de la figure 10b, la rampe 210 sollicite le bossage 46, c'est-à-dire le boîtier même du projecteur, ce qui a pour effet de solliciter la patte d'accrochage 45 vers l'avant du véhicule (vers le bas sur les figures 10a et 10b), si bien que le jeu (distance d3) existant avant verrouillage est ramené à zéro lors de l'opération de verrouillage constituée par la translation du projecteur de la droite vers la gauche.

Maintenant en référence à la figure 11, on a illustré schématiquement une variante de réalisation du dispositif de fixation réglable illustré sur les figures 1 à 5. Sur la figure 11, des éléments ou parties identiques ou similaires à ceux des figures 1 à 5 sont désignés dans la mesure du possible par les mêmes signes de référence.

Selon cette variante, la douille, référencée ici 100, est constituée par deux parties 110, 120 réalisées d'un seul tenant mais reliées par des parties frangibles susceptibles de se rompre lorsqu'un couple excessif est appliqué entre ces deux parties.

Plus précisément, une partie extérieure 110 en forme de disque est reliée par des zones fragiles 122 à une partie intérieure 120 en forme de disque de diamètre plus faible et disposée de façon excentrée par rapport à la partie extérieure.

En outre, la partie 120 est traversée par un passage (non représenté) de section non circulaire, par exemple de section carrée, complémentaire d'une partie 31 de la vis 30. La vis 30 est ici vissée directement dans l'ouverture 22 délimitée par la collerette 21, le tout formé dans la partie de structure 20 comme précédemment.

Lorsque la vis 30 est vissée, elle commence par entraîner en rotation à la fois les parties 110 et 120 de la douille 100, et ladite partie 120 agit sur le muret 41 pour déplacer l'ensemble du projecteur en translation latérale comme précédemment. Ensuite, dès que le projecteur atteint sa position de référence telle que définie par les moyens de butée, le muret 41 s'oppose à la poursuite de la rotation de la partie 120, et les parties fragiles 122 se rompent. La rotation de la vis 30 étant poursuivie, elle continue à entraîner la partie 110, jusqu'à ce que celle-ci soit fermement appliquée contre le fond du logement 43 pour réaliser le blocage définitif.

Selon une autre variante de réalisation, non illustrée, il est avantageux de placer le dispositif de fixation réglable à douille sous le capot du véhicule, de façon à limiter son accessibilité et donc bien garantir l'inviolabilité du projecteur.

Bien entendu, l'invention n'est nullement limitée aux formes de réalisation décrites et représentées, mais l'homme du métier saura y apporter toute variante ou modification conforme à son esprit.

## Revendications

1. Appareil d'éclairage ou de signalisation pour véhicule automobile, comportant un boîtier (4) et des moyens de fixation réglable dudit boîtier sur une partie de structure (20) du véhicule, ainsi que des moyens de butée (50, J) s'opposant à un déplacement du projecteur dans une direction donnée pour définir une position de référence dudit projecteur par rapport à la carrosserie (C) du véhicule, **caractérisé en ce que** lesdits moyens de fixation réglable comprennent un organe de fixation par rotation (30) apte à coopérer avec ladite partie de structure (20) et entraînant pendant une phase initiale de sa rotation un moyen formant came (10 ; 100) apte à solliciter l'appareil dans ladite direction donnée.

2. Appareil selon la revendication 1, **caractérisé en ce que** ledit organe de fixation (30) est constitué par une vis.

3. Appareil selon la revendication 2, **caractérisé en ce que** ledit moyen formant came comprend une douille (10 ; 100) présentant une partie essentiellement circulaire (12 ; 110) formant une came et traversée par ladite vis de façon excentrée.

4. Appareil selon la revendication 3, **caractérisé en ce que** ladite vis (30) entraîne ladite douille (10) en rotation par le jeu d'une friction limitée entre le filetage de la vis et un passage (13) formé dans la douille pour la traversée de la vis.

5. Appareil selon la revendication 4, **caractérisé en ce que** la douille possède un canon (11) recevant ladite vis et apte à être engagé étroitement dans une ouverture (22) formée dans ladite partie de structure (20) du véhicule.

6. Appareil selon la revendication 5, **caractérisé en ce que** ledit canon (11) comprend une pluralité de branches (11b) aptes à être sollicitées par ladite vis, lors de son vissage, en direction d'une paroi (21) de ladite partie de structure délimitant ladite ouverture (22).

7. Appareil selon la revendication 2, **caractérisé en ce que** ladite douille est constituée de deux parties (110, 120) reliées par au moins une zone frangible (122), une partie intérieure (120) étant solidaire en rotation de la vis tandis qu'une partie extérieure (110) forme une came.

8. Appareil selon la revendication 7, **caractérisé en ce que** ladite vis (30) est vissée directement dans une ouverture (22) formée dans la partie de structure (20) du véhicule.

9. Appareil selon l'une des revendications 3 à 8, **caractérisé en ce que** ladite partie formant came (12 ; 110) agit sur un muret (41) entourant un logement (43) dans lequel elle est reçue.

10. Appareil selon l'une des revendications 1 à 9, **caractérisé en ce que** le boîtier du projecteur possède au moins une patte de pré-montage (45) possédant une partie terminale d'accrochage (452) et apte à coopérer avec une ouverture (25) formée dans ladite partie de structure (20).

11. Elément de structure (2) pour véhicule automobile, **caractérisé en ce qu'**il est constitué par une pièce d'un seul tenant destinée à s'étendre à l'avant du véhicule sur une partie substantielle de sa largeur et possédant dans la région de ses deux extrémités latérales (20) des aménagements (22, 25, 26) pour le montage et la fixation de deux appareils selon l'une des revendications précédentes, constituant des projecteurs gauche et droit.

12. Elément de structure pour véhicule automobile, destiné à recevoir au moins un appareil selon la revendication 10, **caractérisé en ce qu'**il possède au moins une première ouverture (22) pour recevoir l'organe de fixation par rotation (30) appartenant aux moyens de fixation réglable de l'appareil, et au moins une seconde ouverture (25) destinée à recevoir une patte de pré-montage (45) de l'appareil en autorisant son déplacement selon ladite direction donnée, ladite seconde ouverture présentant une largeur, mesurée transversalement à ladite direction donnée, qui diminue lorsque ladite fente est parcourue selon ladite direction donnée.

13. Elément de structure selon la revendication 12, **caractérisé en ce que** la ou chaque seconde ouverture (25) comprend, selon ladite direction donnée, une première partie (251) d'une première largeur constante suivie d'une seconde partie (252) d'une seconde largeur constante inférieure à la première.

14. Elément de structure selon la revendication 13, **caractérisé en ce que** ladite première largeur constante est supérieure à l'épaisseur hors-tout d'une patte de pré-montage (45) associée, et **en ce que** ladite seconde largeur constante est légèrement supérieure l'épaisseur d'une partie de liaison (451) de ladite patte.

15. Elément de structure selon l'une des revendications 12 à 14, **caractérisé en ce qu'**il comprend au voisinage de la ou chaque seconde ouverture une rampe (210) apte à solliciter la patte de pré-montage associée (45) dans une direction tendant à l'extraire de ladite seconde ouverture (25).

16. Ensemble d'un élément de structure (2) selon la revendication 11 et de deux appareils d'éclairage selon l'une des revendications 1 à 10, constituant des projecteurs gauche et droit.

17. Ensemble d'un élément de structure (2) selon l'une des revendications 12 à 16 et d'au moins un appareil d'éclairage ou de signalisation selon la revendication 10.

## Claims

1. Lighting or signalling apparatus for motor vehicle, comprising a housing (4) and means of adjustable fixing of the said housing to a structural part (20) of the vehicle, as well as means of abutment (50, J) countering a displacement of the headlamp in a given direction so as to define a reference position of the said headlamp with respect to the body (C) of the vehicle, **characterized in that** the said means of adjustable fixing comprise a member for fixing by rotation (30) able to cooperate with the said structural part (20) and driving during an initial phase of its rotation a means forming a cam (10; 100) able to urge the apparatus in the said given direction.

2. Apparatus according to Claim 1, **characterized in that** the said fixing member (30) is constituted by a screw.

3. Apparatus according to Claim 2, **characterized in that** the said means forming a cam comprises a dowel (10; 100) exhibiting an essentially circular part (12; 110) forming a cam and traversed by the said screw in an off-centred manner.

4. Apparatus according to Claim 3, **characterized in that** the said screw (30) drives the said dowel (10) in rotation via the intermediary of limited friction between the threading of the screw and a passage (13) formed in the dowel for the traversal of the screw.

5. Apparatus according to Claim 4, **characterized in that** the dowel possesses a barrel (11) receiving the said screw and able to be engaged tightly in an opening (22) formed in the said structural part (20) of the vehicle.

6. Apparatus according to Claim 5, **characterized in that** the said barrel (11) comprises a plurality of branches (11b) able to be urged by the said screw, during the screwing thereof, in the direction of a wall (21) of the said structural part delimiting the said opening (22).

7. Apparatus according to Claim 2, **characterized in that** the said dowel consists of two parts (110, 120) linked by at least one frangible zone (122), an interior part (120) being integral in rotation with the screw while an exterior part (110) forms a cam.

8. Apparatus according to Claim 7, **characterized in that** the said screw (30) is screwed directly into an opening (22) formed in the structural part (20) of the vehicle.

9. Apparatus according to one of Claims 3 to 8, **characterized in that** the said part forming a cam (12; 110) acts on a flange (41) surrounding a recess (43) in which the said part is received.

10. Apparatus according to one of Claims 1 to 9, **characterized in that** the housing of the headlamp possesses at least one pre-mounting lug (45) possessing a terminal fastening part (452) and able to cooperate with an opening (25) formed in the said structural part (20).

11. Structural element (2) for a motor vehicle, **characterized in that** it consists of a one-piece component intended to extend at the front of the vehicle over a substantial part of its width and possessing in the region of its two lateral ends (20) facilities (22, 25, 26) for the mounting and the fixing of two apparatuses according to one of the preceding claims, constituting left and right headlamps.

12. Structural element for motor vehicle, intended to receive at least one apparatus according to Claim 10, **characterized in that** it possesses at least one first opening (22) for receiving the member for fixing by rotation (30) belonging to the means of adjustable fixing of the apparatus, and at least one second opening (25) intended to receive a lug for pre-mounting (45) of the apparatus while permitting its displacement in the said given direction, the said second opening exhibiting a width, measured transversely to the said given direction, which decreases when travelling through the said slot in the said given direction.

13. Structural element according to Claim 12, **characterized in that** the or each second opening (25) comprises, in the said given direction, a first part (251) of a first constant width followed by a second part (252) of a second constant width which is less than the first.

14. Structural element according to Claim 13, **characterized in that** the said first constant width is greater than the overall thickness of an associated pre-mounting lug (45), and **in that** the said second constant width is slightly greater than the thickness of a linking part (451) of the said lug.

15. Structural element according to one of Claims 12 to 14, **characterized in that** it comprises in the neighbourhood of the or each second opening a ramp (210) able to urge the associated pre-mounting lug (45) in a direction tending to extract it from the said second opening (25).

16. Assembly of a structural element (2) according to Claim 11, and of two lighting apparatuses according to one of Claims 1 to 10, constituting left and right headlamps.

17. Assembly of a structural element (2) according to one of Claims 12 to 16 and of at least one lighting or signalling apparatus according to Claim 10.

## Patentansprüche

1. Beleuchtungs- oder Signaleinrichtung für ein Kraftfahrzeug, die ein Gehäuse (4) und Mittel zur einstellbaren Befestigung des Gehäuses an einem Strukturteil (20) des Fahrzeugs sowie Anschlagmittel (50, J) aufweist, die einer Verschiebung des Scheinwerfers in einer gegebenen Richtung entgegenwirken, um eine Bezugsposition des Scheinwerfers bezüglich der Karosserie (C) des Fahrzeugs zu definieren, **dadurch gekennzeichnet, dass** die Mittel zur einstellbaren Befestigung ein Organ (30) zur Befestigung durch Drehung aufweisen, das in der Lage ist, mit dem Strukturteil (20) zusammenzuwirken und während einer Anfangsphase seiner Drehung ein eine Nockenscheibe (10; 100) bildendes Mittel antreibt, das in der Lage ist, die Einrichtung in die gegebene Richtung zu beaufschlagen.

2. Einrichtung nach Anspruch 1, **dadurch gekennzeichnet, dass** das Befestigungsorgan (30) aus einer Schraube besteht.

3. Einrichtung nach Anspruch 2, **dadurch gekennzeichnet, dass** das eine Nockenscheibe bildende Mittel eine Hülse (10; 100) aufweist, die einen im Wesentlichen kreisförmigen Teil (12; 110) besitzt, der eine Nockenscheibe bildet und von der Schraube exzentrisch durchquert wird.

4. Einrichtung nach Anspruch 3, **dadurch gekennzeichnet, dass** die Schraube (30) die Hülse (10) durch das Spiel einer begrenzten Reibung zwischen dem Gewinde der Schraube und einem in der Hülse für den Durchlass der Schraube ausgebildeten Durchgang (13) in Drehung versetzt.

5. Einrichtung nach Anspruch 4, **dadurch gekennzeichnet, dass** die Hülse einen Schaft (11) aufweist, der die Schraube aufnimmt und eng in eine Öffnung (22) eingeführt werden kann, die im Strukturteil (20) des Fahrzeugs ausgebildet ist.

6. Einrichtung nach Anspruch 5, **dadurch gekennzeichnet, dass** der Schaft (11) mehrere Zweige (11b) aufweist, die von der Schraube bei ihrem Verschrauben in Richtung einer Wand (21) des Strukturteils beaufschlagt werden können, die die Öffnung (22) begrenzt.

7. Einrichtung nach Anspruch 2, **dadurch gekennzeichnet, dass** die Hülse aus zwei Teilen (110, 120) besteht, die durch mindestens eine zerbrechliche Zone (122) verbunden sind, wobei ein innerer Teil (120) drehfest mit der Schraube verbunden ist, während ein äußerer Teil (110) eine Nockenscheibe bildet.

8. Einrichtung nach Anspruch 7, **dadurch gekennzeichnet, dass** die Schraube (30) direkt in eine Öffnung (22) geschraubt wird, die im Strukturteil (20) des Fahrzeugs ausgebildet ist.

9. Einrichtung nach einem der Ansprüche 3 bis 8, **dadurch gekennzeichnet, dass** der eine Nockenscheibe bildende Teil (12; 110) auf einen hoch stehenden Rand (41) einwirkt, der einen Sitz (43) umgibt, in dem er aufgenommen wird.

10. Einrichtung nach einem der Ansprüche 1 bis 9, **dadurch gekennzeichnet, dass** das Gehäuse des Scheinwerfers mindestens eine Vormontagelasche (45) aufweist, die einen Endbefestigungsteil (452) besitzt und in der Lage ist, mit einer Öffnung (25) zusammenzuwirken, die im Strukturteil (20) ausgebildet ist.

11. Strukturelement (2) für ein Kraftfahrzeug, **dadurch gekennzeichnet, dass** es aus einem zusammenhängenden Bauteil besteht, das dazu bestimmt ist, sich an der Vorderseite des Fahrzeugs über einen wesentlichen Teil seiner Breite zu erstrecken, und das im Bereich seiner beiden seitlichen Enden (20) Vorrichtungen (22, 25, 26) zur Montage und zur Befestigung von zwei Einrichtungen gemäß einem der vorhergehenden Ansprüche aufweist, die linke und rechte Scheinwerfer bilden.

12. Strukturelement für ein Kraftfahrzeug, das dazu bestimmt ist, mindestens eine Einrichtung gemäß Anspruch 10 aufzunehmen, **dadurch gekennzeichnet, dass** es mindestens eine erste Öffnung (22), um das Organ (30) zur Befestigung durch Drehung aufzunehmen, das zu den Mitteln zur einstellbaren Befestigung der Einrichtung gehört, und mindestens eine zweite Öffnung (25) aufweist, die dazu bestimmt ist, eine Vormontagelasche (45) der Einrichtung aufzunehmen, indem sie ihre Bewegung in der gegebenen Richtung erlaubt, wobei die zweite Öffnung eine Breite, gemessen quer zur gegebenen Richtung, aufweist, die abnimmt, wenn der Schlitz gemäß der gegebenen Richtung durchquert wird.

13. Strukturelement nach Anspruch 12, **dadurch gekennzeichnet, dass** die oder jede zweite Öffnung (25) in der gegebenen Richtung einen ersten Teil (251) einer ersten konstanten Breite, gefolgt von einem zweiten Teil (252) einer zweiten konstanten Breite geringer als die erste aufweist.

14. Strukturelement nach Anspruch 13, **dadurch gekennzeichnet, dass** die erste konstante Breite größer ist als die größte Dicke einer zugeordneten Vormontagelasche (45), und dass die zweite konstante Breite geringfügig größer ist als die Dicke eines Verbindungsteils (451) der Lasche.

15. Strukturelement nach einem der Ansprüche 12 bis 14, **dadurch gekennzeichnet, dass** es in der Nähe der oder jeder zweiten Öffnung eine Rampe (210) aufweist, die in der Lage ist, die zugeordnete Vormontagelasche (45) in einer Richtung zu beaufschlagen, die dazu neigt, sie aus der zweiten Öffnung (25) herauszuziehen.

16. Einheit aus einem Strukturelement (2) nach Anspruch 11 und zwei Beleuchtungseinrichtungen nach einem der Ansprüche 1 bis 10, die linke und rechte Scheinwerfer bilden.

17. Einheit aus einem Strukturelement (2) nach einem der Ansprüche 12 bis 16 und mindestens einer Beleuchtungs- oder Signaleinrichtung nach Anspruch 10.
